# EUROPÄISCHE PATENTSCHRIFT

(11) **EP 0 292 744 B1**
(45) Veröffentlichungstag und Bekanntmachung des Hinweises auf die Patenterteilung: **15.09.1993**
(21) Anmeldenummer: 88107133.6
(22) Anmeldetag: 04.05.1988
(51) Int. Cl.: G01S 5/18, G01V 1/38

(54) **Verfahren zur Ortsbestimmung von hinter einem Schiff geschleppten Kabelabschnitten**
Procedure for determining the position of cable sections towed behind a ship
Procédé pour déterminer la position de parties d'un câble remorqué par un navire

(30) Priorität: 23.05.1987 DE 3717708
(43) Veröffentlichungstag der Anmeldung: 30.11.1988
(73) Patentinhaber: PRAKLA-SEISMOS GmbH, 30655 Hannover (DE)
(72) Erfinder: Kühn, Horst-Dietrich, D-3000 Hannover 61 (DE); Brosch, Siegfried, D-3000 Hannover 51 (DE); Kramer, Friedrich, Ing.-grad., D-3150 Peine (DE)
(74) Vertreter: Meyer, Ludgerus A., Dipl.-Ing.

(56) Entgegenhaltungen:
- OCEAN INDUSTRY, Band 22, Januar 1987, Seiten 17-22, US; M.H. HOUSTON: "Improving the accuracy of marine 3-D seismic surveys"
- PATENT ABSTRACTS OF JAPAN, Band 3, Nr. 1 (E-82)[140], 11. Januar 1979;& JP-A-53 128 360

## Beschreibung

Die Erfindung betrifft ein Verfahren zur Ortsbestimmung von hinter einem Schiff geschleppten Kabelabschnitten, insbesondere Streamern nach dem Oberbegriff des Anspruchs 1.

In der Seeseismik ist es üblich, zur Prospektion des Untergrundes von einem Schiff geschleppte Streamer über den Untergrund durch das Wasser zu ziehen, wobei die entlang eines Streamers verteilten Sensoren auf seismische Signale ansprechen, die von gleichzeitig mit dem Schiff geschleppten und im regelmäßigen zeitlichen Abstand ausgelösten Schallquellen herrühren. Die von den Sensoren in den Streamern empfangenen Meßsignale werden in Aufzeichnungsanlagen auf dem Schiff gespeichert und später an Land in einem Rechenzentrum ausgewertet.

Für ein zuverlässiges Auswertungsergebnis ist es notwendig, die aufgezeichneten Signale den genauen Meßpositionen von Quellen und Empfängern der Signale zuordnen zu können. Die Anforderungen an die Genauigkeit der Positionsbestimmung sind in den letzten Jahren beträchtlich angestiegen, insbesondere durch die zunehmende Verbreitung der 3D-Seismik. Dieses Verfahren erfordert eine feine Rasterung des Untergrundes, die nur aufgrund hoher Anforderungen an die Genauigkeit der Ortsbestimmung der Streamer erreichbar ist.

Für eine 3D-Messung werden vielfach zwei oder mehrere parallel angeordnete Streamer verwendet, zwischen denen sich die Schallquellen, nämlich Airguns, befinden. Die Streamer werden dabei im Abstand von etwa 100 - 150 m vom Schiff gezogen, während die Airguns einen Abstand von etwa 10 - 50 m aufweisen. Um den Abstand der Streamer zu erreichen, werden deren Köpfe üblicherweise über Scherbretter auseinandergehalten.

Die Position der Streamerköpfe relativ zum Schiff kann auf verschiedene Weise ermittelt werden. In einfachen Fällen reicht es aus, den Abgangswinkel des Streamers vom Schiff festzustellen. Es sind auch Radarortungsverfahren vorgeschlagen worden. Bei denjenigen Meßprinzipien, die einen oder mehrere Meßstellen auf dem Schiff aufweisen, ist zwar die Entfernungsbestimmung zu einem Sensor am Streamerkopf relativ genau möglich, jedoch ist die Winkelbestimmung nur eingeschränkt möglich. Ferner ist es schwierig, den genauen Abstand von parallel nebeneinander geführten Streamern zu ermitteln.

Aus einem Aufsatz in "Ocean Industry", Januar 1987, Seiten 17ff ist ein Verfahren zur Bestimmung der Positionen von Streamerköpfen bekannt, bei dem seitlich neben dem Schiff geführte Tauchkörper verwendet werden. Diese Tauchkörper enthalten Sender und Empfänger, die es in Verbindung mit einer festen Schiffslängslinie gestatten, über ein Trilaterationsverfahren den Ort der Tauchkörper zu bestimmen. Die auf diese Weise zwischen den Tauchkörpern gebildete Basislinie ermöglicht es, über weitere Trilaterationsschritte die Position von Streamerköpfen der vom Schiff geschleppten Streamerkabel festzustellen.

Da die Tauchkörper nicht starr am Schiff befestigt werden können, vollziehen diese eine gewisse Bewegung im Wasser, die zu Ungenauigkeiten der Ortsbestimmung dieser Tauchkörper führen kann, insbesondere, wenn die Position der Tauchkörper alternierend bestimmt wird. Der Genauigkeit des angegebenen Prinzips sind daher relativ enge Grenzen gesetzt.

Die hohen Genauigkeitsanforderungen bei einer 3D-Messung erfordern, daß auch bei einem Streamerabstand von 100 - 150 m und einer Entfernung von den Tauchkörpern bis zum Streamerkopf von etwa 250 - 400 m noch Genauigkeiten der Positionsbestimmung von 1 bis 2 m erreichbar sind.

Zur Erfüllung dieser Anforderungen liegt der Erfindung die Aufgabe zugrunde ausgehend von der Veröffentlichung "Ocean Industry", ein verbessertes Verfahren zur Ortsbestimmung von hinter einem Schiff geschleppten Kabelabschnitten, insbesondere Streamern, anzugeben, das eine erhöhte Genauigkeit an die Positionsbestimmung ermöglicht und auch bei rauher See und schnell wechselnden Einflußnahmen auf das Schiff eine hohe Genauigkeit ermöglicht.

Diese Aufgabe wird durch die im Anspruch 1 angegebene Erfindung gelöst. Vorteilhafte Weiterbildungen der Erfindung sind in Unteransprüchen angegeben.

Das Verfahren nach der Erfindung zeichnet sich dadurch aus, daß die Positionsbestimmung der Streamerköpfe bzw. Airgunköpfe auf der Verwendung einer redundant errechneten Tauch-körper-Basislinie beruht. Diese Tauchkörper-Basislinie wird einerseits durch alternierende Trilateration zwischen einer festen Schiffs-Längslinie und den Laufzeiten zwischen dem Schiff und den Tauchkörpern und andererseits durch direkte Laufzeitbestimmung zwischen den zwei Tauchkörpern ermittelt. Da die Tauchkörper-Basislinie bei jeder Trilateration eines Tauchkörpers ermittelt wird,ist diese Basislinie, anders als beim Stand der Technik, äußerst genau. Deren Genauigkeit spiegelt sich bei der Bestimmung der Position der Streamerköpfe bzw. Airgunköpfe relativ zum Schiff wider.

Durch die Erfindung lassen sich Positionsbestimmungen von Streamerköpfen relativ zum Schiff von 1 bis 2 m erreichen.

Die Erfindung wird nachstehend anhand eines Ausführungsbeispieles näher erläutert. Es zeigen:
- Fig. 1: eine perspektivische Ansicht einer Streameranordnung an einem Schiff, von unten gesehen,
- Fig. 2: eine Darstellung der geometrischen Verhältnisse zur Positionsbestimmung,
- Fig. 3: eine Aufsicht auf eine Schiff-Streameranordnung mit zwei parallelen Streamern von oben,
- Fig. 4: eine Ansicht Schiff-Streamer von der Seite,
- Fig. 5: eine Aufsicht auf eine Schiff-Streameranordnung mit einem einzigen Streamer.

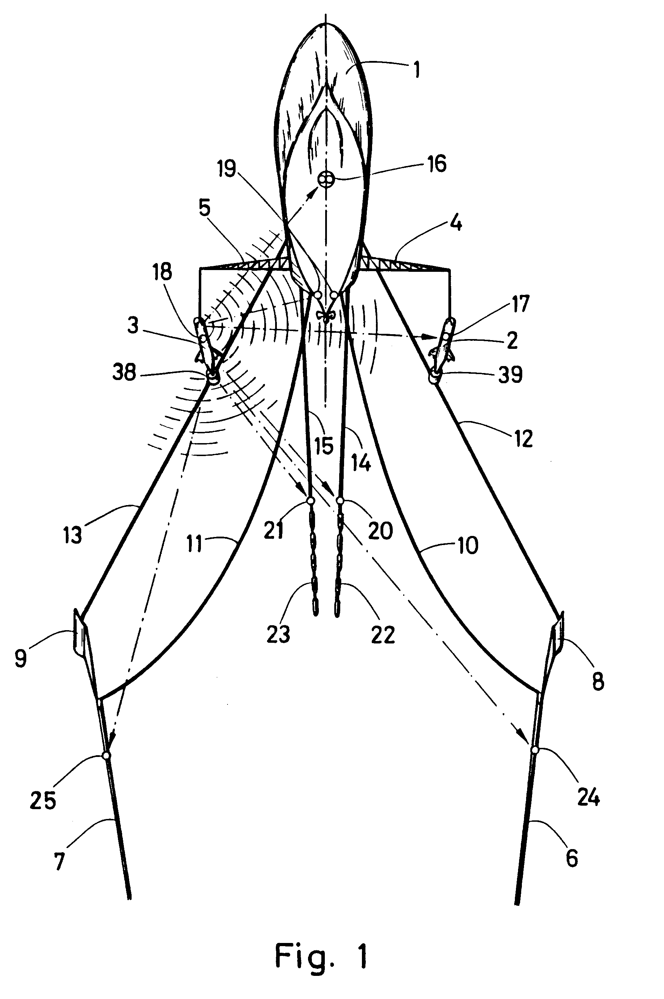

Fig. 1 zeigt die wesentlichen beim erfindungsgemäßen Verfahren verwendeten Elemente. An dem Schiff 1, das von unten dargestellt ist, sind am Heck zwei Abgangsstränge 10 und 11 angeordnet, die an ihren Enden mit den Streamern 6 und 7 verbunden sind. Durch die Scherbretter 8 und 9 werden die Streamer 6 und 7 auf Abstand gehalten, wobei der Abstand durch die Steuerstränge 12 und 13 eingestellt wird. Der normale Abstand zweier paralleler Streamer beträgt in der Regel etwa 100 - 150 m.

Im Heckbereich des Schiffes 1 befinden sind zwei seitlich gerichtete Ausleger 4 und 5, an deren Enden Tauchkörper 2 und 3 angehängt sind, die sich etwa in gleicher Wassertiefe wie die Streamer befinden (8 bis 10 m). Der Abstand der Tauchkörper 2 und 3 beträgt etwa 40 m.

Ebenfalls am Heck sind zwei Airgunkabel 14 und 15 befestigt, die an ihren Enden die Schallquellen (Airguns) 22 und 23 tragen.

Am Schiffsboden sind im Totholz neben der Schiffswelle Empfänger 19 und im vorderen Schiffsbereich im Kiel ein oder zwei Empfänger 16 angeordnet. Die Tauchkörper 2 und 3 weisen jeweils Sende/Empfänger 17 und 18 auf. Ferner sind Empfänger 24 und 25 an den Streamerköpfen sowie Empfänger 20 und 21 an den Airgunköpfen vorgesehen.

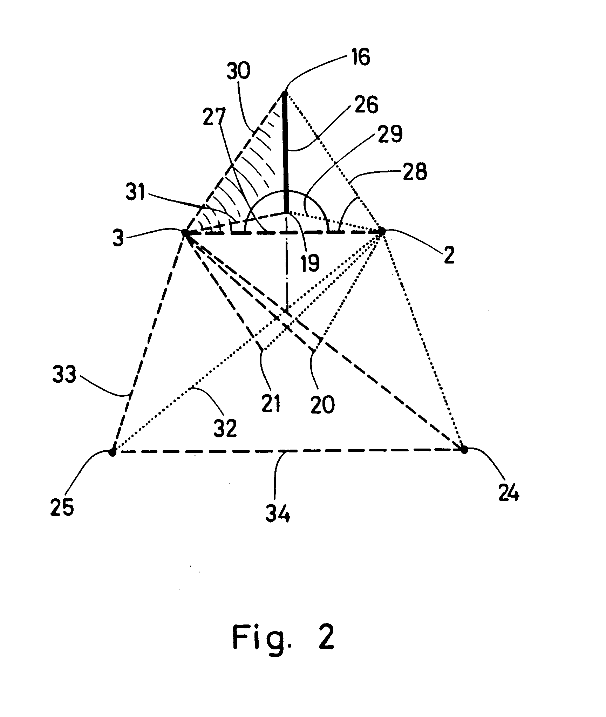

Fig. 2 zeigt das Prinzip der erfindungsgemäßen Positionsbestimmung. Die Sender in den Tauchkörpern 2 und 3 senden Ultraschall-Signale aus, die von den Empfängern im Schiffskörper und den Empfängern an den Streamerköpfen und den Airgunköpfen aufgenommen werden können. Durch eine übliche Steuerschaltung kann die Laufzeit zwischen Aussendung eines Ultraschall-Impulses am Sender und Empfang an den jeweiligen Empfängern bestimmt und ausgewertet werden.

Da der Abstand zwischen den Empfängern 16 und 19 an der Schiffsunterseite fest bestimmt ist, läßt sich aus der Laufzeit eines vom Sender im Tauchkörper 3 ausgesendeten Ultraschallsignals entlang der Strecken 30 und 31 die Position des Tauchkörpers 3 bestimmen. Die entsprechende Position des Tauchkörpers 2 läßt sich aus der Laufzeitmessung entlang der Strecken 28 und 29 bestimmen. Die Schiffslängslinie 26 bleibt daher in jedem Fall konstant.

Die Bestimmung der Positionen der Tauchkörper 2 und 3 wird jeweils abwechselnd vorgenommen, um eindeutige Positionen der Sender in den Tauchkörpern zu erhalten. Aus den Positionen der Tauchkörper 2 und 3 läßt sich der Abstand 27 zwischen den Tauchkörpern rechnerisch bestimmen. Da jedoch die Positionen der Tauchkörper 2 und 3 nur alternativ bestimmt werden, läßt sich der Abstand zwischen den Tauchkörpern 2 und 3 zu keinem Zeitpunkt genau bestimmen, da zwischen den alternierenden Messungen Änderungen aufgetreten sein können. Die Erfindung sieht daher eine zusätzliche direkte Bestimmung der Tauchkörper-Basislinie 27 zwischen den beiden Tauchkörpern 2 und 3 vor, indem das vom Tauchkörper 3 ausgesendete Ultraschall-Signal von einem Empfänger im Tauchkörper 2 und umgekehrt aufgenommen wird, wobei diese Tauchkörper-Basislinie bei jeder durch Trilateration ermittelten Bestimmung der Position einer der Tauchkörper 2 und 3 ermittelt wird. Der Abstand der Tauchkörper 2 und 3 wird daher doppelt so häufig bestimmt wie die Position der Tauchkörper 2 und 3 selbst.

Aufgrund dieser derart bestimmten Tauchkörper-Basislinie 27 läßt sich in weiteren gleichzeitig ausgeführten Trilaterationsschritten z. B. die Position des Streamerkopfes 25 durch Ermittlung der Laufzeiten von Ultraschallsignalen über die Strecken 32 und 33 ermitteln. Die Tauchkörper 2 und 3 weisen daher vorzugsweise zusätzliche Sender 38 und 39 auf, die in rückwärtiger Richtung abstrahlen. Auf die gleiche Weise lassen sich die Kopfpositionen des anderen Streamers 24 und der Airgunköpfe 20 und 21 bestimmen.

Zur weiteren Redundanzerhöhung kann vorgesehen sein, daß am Ort der Streamerköpfe 25 und 24 Ultraschall-Sender vorgesehen sind, durch die eine direkte Entfernungsbestimmung zwischen den Streamerköpfen 24 und 25 möglich ist. Dies ermöglicht eine zusätzliche Kontrolle des Abstandes der Streamer.

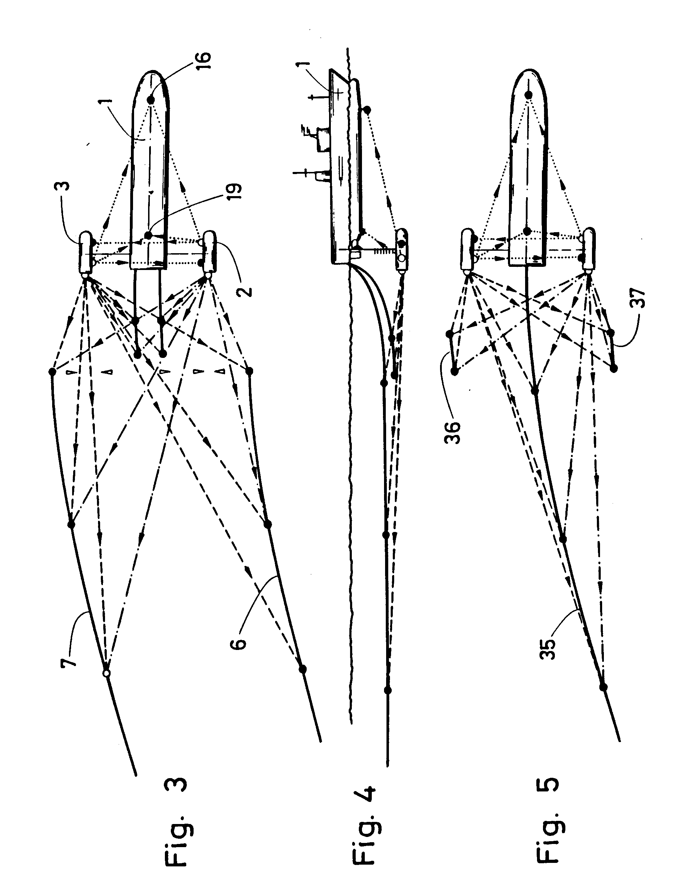

Fig. 3 zeigt eine Prinzipansicht von Streamer und Schiff. Die von den Tauchkörpern 2 und 3 ausgesendeten Signale werden auch von den weiteren Meßstellen entlang der Streamer aufgenommen, so daß bis etwa zu einer Entfernung von 500 m hinter dem Schiff Positionsbestimmungen möglich sind, die jedoch mit zunehmender Entfernung von dem Schiff ungenauer werden. Durch die Genauigkeit der Bestimmung der Tauchkörper-Basislinie ist jedoch noch eine relative Genauigkeit der Positionsbestimmung von Streamerempfängern über eine große Entfernung möglich.

Fig. 4 zeigt eine Ansicht eines Schiffes mit Streamer in Seitenansicht. Die Tauchkörper 2 und 3 befinden sich etwa 8 bis 10 m unterhalb der Wasseroberfläche und senden von dort aus Signale zum Vorschiff und zum Heck des Schiffes, um daraus die Position der Tauchkörper zu bestimmen. Bei der rechnerischen Auswertung wird bei der Bestimmung des Abstandes der Tauchkörper voneinander und der Position der Tauchkörper der vertikale Abstand zu den Empfängern am Schiff berücksichtigt.

Fig. 5 zeigt eine Ansicht einer Streameranordnung, bei der nur ein Streamer verwendet ist. In diesem Fall befinden sich die Airguns 36 und 37 auf beiden Seiten des einzigen Streamers 35. Das grundsätzliche erfindungsgemäße Meßprinzip ändert sich jedoch dadurch nicht.

In einem ausgeführten Verfahren wird die Positionsbestimmung aller Empfänger etwa alle 400 ms durchgeführt. Die Tauchkörper-Basislinie wird jedoch alle 200 ms ermittelt. Die Ultraschallsender und -empfänger sind vorzugsweise piezoelektrische Wandler. Die Erfindung ermöglicht eine Genauigkeit, die für die relative Position des Streamerkopfes zum Schiff bei 1 bis 2 m liegt.

### Bezugszeichenliste

- 1: Schiff
- 2: Tauchkörper
- 3: Tauchkörper
- 4: Ausleger
- 5: Ausleger
- 6: Streamer
- 7: Streamer
- 8: Scherbrett
- 9: Scherbrett
- 10: Abgangsstrang
- 11: Abgangsstrang
- 12: Steuerstrang
- 13: Steuerstrang
- 14: Airgunkabel
- 15: Airgunkabel
- 16: Empfänger
- 17: Sender/Empfänger
- 18: Sender/Empfänger
- 19: Empfänger
- 20: Empfänger
- 21: Empfänger
- 22: Airguns
- 23: Airguns
- 24: Empfänger
- 25: Empfänger
- 26: Schiffslängslinie
- 27: Tauchkörper-Basislinie
- 28-34: Strecken
- 35: Streamer
- 36: Airguns
- 37: Airguns
- 38: Sender
- 39: Sender

## Patentansprüche

1. Verfahren zur Ortsbestimmung von hinter einem Schiff (1) geschleppten Kabelabschnitten (6, 7, 14, 15), insbesondere Streamern, bei dem die Position von Sendern oder Empfängern (20, 21, 24, 25) an einem Kabelabschnitt (6, 7, 14, 15) über ein mathematisches Trilaterationsverfahren ermittelt wird, wobei die dabei verwendete Basislinie (27) aus der Trilateration von Strecken zwischen zwei seitlich vom Schiff geschleppten Tauchkörpern (2, 3) mit einer festen Schiffslängslinie (26) ermittelt wird, dadurch gekennzeichnet, daß bei jeder Trilateration der festen Schiffslängslinie (26) mit der Position eines der Tauchkörper (2, 3) zusätzlich der Abstand der Tauchkörper (2, 3) voneinander (27) gemessen wird und daß dieser Abstand als Tauchkörper-Basislinie (27) für die Trilateration zu jeweils einem der Sender oder Empfänger (20, 21, 24, 25) verwendet wird.

2. Verfahren nach Anspruch 1, dadurch gekennzeichnet, daß zusätzlich bei jeder Trilateration zwischen der Tauchkörper-Basislinie (27) und zwei Sendern oder Empfängern (20, 21, 24, 25) an parallel geschleppten Kabelabschnitten der Abstand der Sender oder Empfänger voneinander (34) bestimmt wird.

3. Verfahren nach Anspruch 1 oder 2, dadurch gekennzeichnet, daß an zwei festen Punkten entlang der Schiffslängsachse Empfänger (16, 19) angeordnet sind, daß in jedem der Tauchkörper (2, 3) Sender zum Aussenden von Ultraschallsignalen vorgesehen sind, deren Laufzeit sowohl von den Empfängern im Schiff (16, 19) als auch von einem Empfänger in dem jeweils anderen Tauchkörper (2, 3) festgestellt wird, daß in den Tauchkörpern weitere Sender vorgesehen sind, deren Schallimpulse von Empfängern (20, 21, 24, 25) in den Kabelabschnitten empfangen werden, und daß die Position der Empfänger relativ zum Schiff aus den ermittelten Laufzeiten der Ultraschallsignale errechnet werden.

4. Verfahren nach einem der Ansprüche 1 - 3, dadurch gekennzeichnet, daß sowohl die Position von einem oder mehreren Streamer-Empfängern (24, 25) als auch die Positionen von gleichzeitig vom Schiff geschleppten Airgunarrays (22, 23) ermittelt werden.

5. Verfahren nach einem der vorhergehenden Ansprüche, dadurch gekennzeichnet, daß alternierend die Positionen von zwei Streamer-Kabelköpfen (24, 25) und gleichzeitig die Kopfpositionen von zwei zwischen den Streamerkabeln geführten Airgunarrays (22, 23) ermittelt werden.

## Claims

1. Process for ascertaining the location of cable sections (6, 7, 14, 15), in Particular of streamers, towed behind a ship (1), in which the position of transmitters or receivers (20, 21, 24, 25) on a cable section (6, 7, 14, 15) is determined by means of a mathematical trilateration process, the base line (27) used in this process being determined from the trilateration of stretches between two immersion bodies (2, 3) towed alongside the ship with a fixed ship's centre line (26), characterised in that, upon each trilateration of the fixed ship's centre line (26) with the position of one of the immersion bodies (2, 3), the distance apart of the immersion bodies (2, 3) is additionally measured (27) and in that this distance is used as the immersion body base line (27) for the trilateration to one of the transmitters or receivers (20, 21, 24, 25) respectively.

2. Process according to Claim 1, characterised in that, upon each trilateration between the immersion body base line (27) and two transmitters or receivers (20, 21, 24, 25) on parallel-towed cable sections, the distance apart (34) of the transmitters or receivers is additionally determined.

3. Process according to Claim 1 or 2, characterised in that receivers (16, 19) are disposed at two fixed points along the ship's longitudinal axis, in that in each of the immersion bodies (2, 3) there are provided transmitters for transmitting ultrasound signals, the travel time of which is established both by the receivers in the ship (16, 19) and by a receiver in the, in each case, other immersion body (2, 3), in that in the immersion bodies there are provided further transmitters, the sound pulses of which are received by receivers (20, 21, 24, 25) in the cable sections, and in that the position of the receivers relative to the ship is calculated from the determined travel times of the ultrasound signals.

4. Process according to one of Claims 1 - 3, characterised in that both the position of one or more streamer receivers (24, 25) and the positions of air-gun arrays (22, 23) towed simultaneously by the ship are determined.

5. Process according to one or more of the preceding claims, characterised in that, alternately, the positions of two streamer cable heads (24, 25) and, at the same time, the head positions of two air-gun arrays (22, 23) guided between the streamer cables are determined.

## Revendications

1. Procédé pour déterminer la position de tronçons de câbles (6, 7, 14, 15) remorqués par un navire (1), notamment de flûtes marines, selon lequel la position d'émetteurs ou de récepteurs (20, 21, 24, 25) prévus au niveau d'un tronçon de câble (6, 7, 14, 15) est calculée par l'intermédiaire d'un procédé de trilatération mathématique, la ligne de base (27) utilisée étant elle-même calculée à partir de la trilatération de distances entre deux corps plongeurs (2, 3) remorqués latéralement par le navire, avec une ligne longitudinale fixe de navire (26), caractérisé en ce que l'on mesure en supplément, pour chaque trilatération de la ligne longitudinale fixe de navire (26) avec la position de l'un des corps plongeurs (2, 3), l'écartement (27) entre les corps plongeurs (2, 3), et en ce que l'on utilise cet écartement comme ligne de base de corps plongeurs (27) pour la trilatération par rapport à l'un des émetteurs ou récepteurs (20, 21, 24, 25).

2. Procédé selon la revendication 1, caractérisé en ce que l'on définit en supplément, lors de chaque trilatération entre la ligne de base de corps plongeurs (27) et deux émetteurs ou récepteurs (20, 21, 24, 25) prévus au niveau de tronçons de câbles remorqués parallèlement, l'écartement (34) entre émetteurs ou récepteurs.

3. Procédé selon la revendication 1 ou 2, caractérisé en ce qu'il est prévu des récepteurs (16, 19) au niveau de deux points fixes le long de l'axe longitudinal du navire, en ce qu'il est prévu, dans chacun des corps plongeurs (2, 3), des émetteurs destinés à émettre des signaux à ultrasons dont le temps de propagation est déterminé non seulement par les récepteurs prévus dans le navire (16, 19), mais aussi par un récepteur prévu dans l'autre corps plongeur (2, 3), en ce qu'il est prévu, dans les corps plongeurs, d'autres émetteurs dont les impulsions sonores sont reçues par des récepteurs (20, 21, 24, 25) prévus dans les tronçons de câbles, et en ce que l'on calcule la position des récepteurs par rapport au navire à partir des temps de propagation calculés des signaux à ultrasons.

4. Procédé selon l'une des revendications 1 à 3, caractérisé en ce que l'on calcule non seulement la position d'un ou plusieurs récepteurs de flûtes marines (24, 25), mais aussi les positions de rangées de canons à air (22, 23) remorquées en même temps par le navire.

5. Procédé selon l'une des revendications précédentes, caractérisé en ce que l'on calcule alternativement les positions de deux têtes de câbles de flûtes marines (24, 25), et simultanément les positions de têtes de deux rangées de canons à air (22, 23) guidées entre les câbles de flûtes marines.
